# EUROPÄISCHE PATENTANMELDUNG

(11) **EP 4 744 918 A1**
(43) Veröffentlichungstag der Anmeldung: **20.05.2026**
(21) Anmeldenummer: 24212926.0
(22) Anmeldetag: 14.11.2024
(51) Int. Cl.: B60J 5/06

(54) **PLANENAUFBAU MIT MITTELRUNGE**

(71) Anmelder: Schmitz Cargobull AG, 48341 Altenberge (DE)
(72) Erfinder: KRÜGER, Mirko, 48282 Emsdetten (DE); HORNIG, Stefan, 48565 Steinfurt (DE); WOLKEN, Stephan, 59077 Hamm (DE)
(74) Vertreter: Cohausz & Florack

(57) **Zusammenfassung**

Beschreiben und dargestellt ist ein Planenaufbau (1) für ein Nutzfahrzeug (N), mit wenigstens einem seitlichen Dachholm (12), einem seitlichen Bodenträger (13) und einer von einer den Dachholm (12) gegenüber dem Bodenträger (13) abstützenden Fahrstellung in eine vom Bodenträger (13) getrennte Ladestellung und zurück verstellbaren Mittelrunge (11), wobei der Bodenträger (13) ein Rungenlager (18) und die Mittelrunge (11) einen Lagerabschnitt (16) zum Ausbilden einer lösbaren Rungenverbindung (26) zwischen dem Rungenlager (18) und der Mittelrunge (11) aufweisen, wobei das Rungenlager (18) eine Schwenkaufnahme (23) und der Lagerabschnitt (16) einen Schwenkriegel (22) zum Eingreifen in die Schwenkaufnahme (23) und zum Schwenken des Lagerabschnitts (16) um das Rungenlager (18) aufweisen und wobei das Rungenlager (18) und der Lagerabschnitt (16) der Rungenverbindung (26) eine Verschlussaufnahme (25) und einen in der Fahrstellung in die wenigstens eine Verschlussaufnahme (25) eingreifenden Verschlussriegel (24) aufweisen. Um die Nachteile aus dem Stand der Technik zu vermeiden ist vorgesehen, dass der Verschlussriegel (24) und die Verschlussaufnahme (25) jeweils ein korrespondierendes vorderes Anschlagflächenpaar (33,34) derart aufweisen und/oder dass der Verschlussriegel (24) und die Verschlussaufnahme (25) jeweils ein korrespondierendes hinteres Anschlagflächenpaar (35,36) derart aufweisen.

## Beschreibung

Die Erfindung betrifft einen Planenaufbau für ein Nutzfahrzeug, insbesondere Lastkraftwagen, Anhänger oder Sattelauflieger, mit wenigstens einem seitlichen Dachholm, wenigstens einem seitlichen Bodenträger und wenigstens einer von einer den Dachholm gegenüber dem Bodenträger abstützenden Fahrstellung in eine vom Bodenträger getrennte Ladestellung und zurück verstellbaren Mittelrunge, wobei der Bodenträger wenigstens ein Rungenlager und die wenigstens eine Mittelrunge einen Lagerabschnitt zum Ausbilden einer lösbaren Rungenverbindung zwischen dem Rungenlager und der Mittelrunge aufweisen, wobei das Rungenlager der wenigstens eine Rungenverbindung eine Schwenkaufnahme und der Lagerabschnitt einen Schwenkriegel zum Eingreifen in die Schwenkaufnahme und zum Schwenken des Lagerabschnitts um das Rungenlager bei in die Schwenkaufnahme eingreifendem Schwenkriegel aufweisen und wobei das Rungenlager und der Lagerabschnitt der wenigstens einen Rungenverbindung wenigstens eine Verschlussaufnahme und wenigstens einen in der Fahrstellung in die wenigstens eine Verschlussaufnahme eingreifenden Verschlussriegel aufweisen.

Nutzfahrzeuge, beispielsweise in Form von Lastkraftwagen, Anhängern und Sattelaufliegern, sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Aufbauten auf, welche der Aufnahme der zu transportierenden Güter in einem Laderaum dienen.

So sind beispielsweise Planenaufbauten bekannt, bei denen die Seitenwände und das Dach durch wenigstens eine Planeneinheit verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn Seitenplanen an den Seitenwänden vorgesehen sind, die entlang der Seitenwände verschoben werden können, spricht man auch von sogenannten Curtainsidern. Unabhängig von der Art der Planenaufbauten weisen diese meist über die Länge der Seitenwände verteilt angeordnete Mittelrungen und Eckrungen an den Enden der Seitenwände auf, wobei die Mittelrungen und Eckrungen das Dach gegenüber dem Ladeboden abstützen. Die Mittelrungen können dabei zum Be- und Entladen des Laderaums in vielen Fällen entfernt oder zur Seite verschoben werden. Die Mittelrungen und Eckrungen können zudem über Aufsatzlatten miteinander verbunden werden, welche die Seitenwände aussteifen. Die Aufsatzlatten werden dabei in Aufsatzlattenhalterungen der Mittelrungen und Eckrungen eingeschoben.

Planenaufbauten weisen typischerweise zu beiden Längsseiten des Dachs sogenannte Dachholme auf, die über die Mittelrungen gegenüber seitlich am Ladeboden vorgesehenen Bodenträgern abgestützt sind. Dabei können die Mittelrungen von einer Fahrstellung, in welcher die Mittelrunge den zugehörigen Dachholm am zugehörigen Bodenträger abstützt, in eine Ladestellung verstellt werden, in welcher die Mittelrunge am zugehörigen Dachholm gehalten und entlang des Dachholms zur Seite verstellt werden kann, um die Seitenwand des Nutzfahrzeugs zum Zwecke des Be- und Entladens freizugeben. In der Ladestellung sind die Mittelrungen von den zugehörigen Bodenträgern getrennt.

Zum lösbaren Verbinden von Mittelrungen und Bodenträgern weisen die Bodenträger Rungenlager auf, an denen die Mittelrungen unter anderem mit korrespondierend ausgebildeten Lagerabschnitten festgelegt werden können, wobei entsprechende Rungenverbindungen zwischen den Lagerabschnitten und den Rungenlagern etabliert werden. In der Fahrstellung greift der Lagerabschnitt mit wenigstens einem Schwenkriegel in eine Schwenkaufnahme der Rungenlager ein.

Die Rungenverbindung wird gelöst, indem der Lagerabschnitt der Mittelrunge gegenüber einem mit dem Dachholm verbundenen Rungenkörper der Mittelrunge geschwenkt wird. Dazu wird zunächst eine feste Verbindung zwischen Rungenkörper und Rungenlager gelöst, welche in der Fahrstellung etabliert ist. Zum Lösen der festen Verbindung zwischen Rungenkörper und Rungenlager wird ein Hebel des Rungenkörpers geschwenkt, wodurch eine Verriegelungslasche des Rungenkörpers aus einer Verriegelungsaufnahme des Rungenlagers herausgezogen wird. Nun kann der Lagerabschnitt und der Rungenkörper um das Rungenlager geschwenkt werden.

Beim Schwenken des Lagerabschnitts, um den Rungenkörper wird wenigstens ein Schwenkriegel um eine den Schwenkriegel in der Fahrstellung aufnehmende Schwenkaufnahme geschwenkt. Währenddessen gelangt wenigstens ein Verschlussriegel des Lagerabschnitts außer Eingriff mit wenigstens einer korrespondierenden Verschlussaufnahme des Rungenlagers. Wenn der wenigstens eine Verschlussriegel aus der zugehörigen wenigstens einen Verschlussaufnahme geschwenkt ist, kann der wenigstens eine Schwenkriegel des Lagerabschnitts aus der wenigstens einen Schwenkaufnahme des Rungenlagers herausgezogen werden. Die Mittelrunge hängt nun nur noch am Dachholm und nicht mehr am Bodenträger. Die Mittelrunge kann daher entlang des Dachholms nach vorne oder nach hinten verschoben werden.

Bei bekannten Mittelrungen kommt es im Betrieb des Nutzfahrzeugs immer wieder zu versehentlich herausfallenden Aufsatzlatten oder zu sich versehentlich lösenden Mittelrungen.

Daher liegt der vorliegenden Erfindung die Aufgabe zugrunde, den Planenaufbau der eingangs genannten und zuvor näher erläuterten Art derart auszugestalten und weiterzubilden, dass die vorstehend genannten Nachteile verhindert werden.

Diese Aufgabe ist bei einem Planenaufbau nach dem Oberbegriff von Anspruch 1 dadurch gelöst, dass
- der wenigstens eine Verschlussriegel und die wenigstens eine Verschlussaufnahme der wenigstens einen Rungenverbindung jeweils wenigstens ein korrespondierendes vorderes Anschlagflächenpaar derart aufweisen, so dass in der Fahrstellung die vorderen Anschlagflächenpaare bei einem Schwenken der Mittelrunge nach vorne um eine in Längsrichtung des Bodenträgers und/oder des Dachholms zwischen den vorderen Anschlagflächenpaaren und quer zum Bodenträger und/oder Dachholm angeordnete Schwenkachse in eine ein weiteres Schwenken der Mittelrunge nach vorne formschlüssig blockierende Anlage aneinander gelangen und/oder dass
- der wenigstens eine Verschlussriegel und die wenigstens eine Verschlussaufnahme der wenigstens einen Rungenverbindung jeweils wenigstens ein korrespondierendes hinteres Anschlagflächenpaar derart aufweisen, so dass in der Fahrstellung die hinteren Anschlagflächenpaare bei einem Schwenken der Mittelrunge nach hinten um eine in Längsrichtung des Bodenträgers und/oder des Dachholms zwischen den hinteren Anschlagflächenpaaren und quer zum Bodenträger und/oder Dachholm angeordnete Schwenkachse in eine ein weiteres Schwenken der Mittelrunge nach hinten formschlüssige blockierende Anlage aneinander gelangen.

Bei dem Planenaufbau ist wenigstens ein Verschlussriegel und wenigstens eine Verschlussaufnahme vorgesehen, die in besonderer Weise korrespondierend zueinander ausgebildet sind. Dabei ist die Zuordnung des wenigstens einen Verschlussriegels und der wenigstens einen Verschlussaufnahme zu dem Rungenlager und dem Lagerabschnitt nicht festgelegt. Ein Verschlussriegel kann am Lagerabschnitt und eine Verschlussaufnahme am Rungenlager vorgesehen sein. Alternativ oder zusätzlich kann aber auch ein Verschlussriegel am Rungenlager und eine Verschlussaufnahme am Lagerabschnitt vorgesehen sein.

Ein Verschlussriegel und die korrespondierende Verschlussaufnahme einer Rungenverbindung weisen jeweils wenigstens ein korrespondierendes vorderes Anschlagflächenpaar auf. Die vorderen Anschlagflächenpaare sind dabei so vorgesehen, dass diese in der Fahrstellung der Mittelrunge bei einem Schwenken der Mittelrunge nach vorne bezogen auf den Planenaufbau in Anlage aneinander gelangen. Dabei wird die Mittelrunge um eine Schwenkachse geschwenkt, die quer zur Längsrichtung des Bodenträgers und/oder des Dachholms ausgerichtet ist und zudem in der Längsrichtung des Bodenträgers und/oder des Dachholms zwischen den vorderen Anschlagflächenpaaren angeordnet sind. Die Anlage der vorderen Anschlagflächenpaare aneinander führt zu einem formschlüssigen Blockieren der Mittelrunge gegenüber einem weiteren Schwenken nach vorne in Bezug auf den Planenaufbau. Dies führt dazu, dass die Mittelrunge während der Fahrt des Nutzfahrzeugs allenfalls geringfügig nach vorne schwenken kann. Zudem können in einem solchen Fall von der Mittelrunge Kräfte in erheblichem Maße an den Bodenträger abgeleitet werden. Es kommt so nicht zu einem zu ausgeprägten Verwinden des Plananaufbaus, so dass keine Aufsatzlatten aus der Mittelrunge herausrutschen können. Auch wird so verhindert, dass sich der Lagerabschnitt versehentlich vom Rungenlager löst.

Alternativ oder zusätzlich kann ein Verschlussriegel und eine korrespondierende Verschlussaufnahme der wenigstens einen Rungenverbindung jeweils wenigstens ein korrespondierendes hinteres Anschlagflächenpaar aufweisen. Dabei sind die hinteren Anschlagflächenpaare so vorgesehen, dass die Anschlagflächenpaare in Anlage aneinander gelangen, wenn die Mittelrunge in der Fahrstellung nach hinter bezogen auf den Planenaufbau geschwenkt wird. Beim Schwenken der Mittelrunge nach hinten um eine Schwenkachse, die sich quer zur Längserstreckung des Bodenträgers und/oder des Dachholms erstreckt und ferner zwischen den hinteren Anschlagflächenpaaren angeordnet ist, gelangen die hinteren Anschlagflächenpaare in Anlage aneinander und blockieren so formschlüssig ein weiteres Schwenken der Mittelrunge nach hinten. Dies führt dazu, dass die Mittelrunge während der Fahrt des Nutzfahrzeugs allenfalls geringfügig nach hinten schwenken kann. Zudem können in einem solchen Fall von der Mittelrunge Kräfte in erheblichem Maße an den Bodenträger abgeleitet werden. Es kommt so nicht zu einem zu ausgeprägten Verwinden des Plananaufbaus, so dass keine Aufsatzlatten aus der Mittelrunge herausrutschen können. Auch wird so verhindert, dass sich der Lagerabschnitt versehentlich vom Rungenlager löst.

Die Mittelrunge kann in einem besonders einfachen Fall um die gleiche Schwenkachse nach vorne und nach hinten schwenken. Unabhängig davon bezeichnen die vorderen Anschlagflächenpaare und die hinteren Anschlagflächenpaare nicht unbedingt die Lage der Anschlagflächenpaare, sondern eher den Lastfall, in dem die Anschlagflächenpaare aktive sind, nämlich beim Schwenken der Mittelrunge nach vorne oder nach hinten. Die Rungenverbindung kann einfach und kompakt ausgebildet werden, wenn lediglich ein Verschlussriegel und eine Verschlussaufnahme vorgesehen sind. Zwingend ist dies aber nicht. Denkbar ist insbesondere, dass die vorderen Anschlagflächenpaare und die hinteren Anschlagflächenpaare jeweils auf zwei Verschlussriegel und Verschlussaufnahmen aufgeteilt vorgesehen sind. Auch können zwei Verschlussriegel und eine Verschlussaufnahme zusammenwirken und umgekehrt.

Der Planenaufbau weist zudem vorzugsweise an gegenüberliegenden Längsseiten jeweils wenigstens eine Mittelrunge auf, die mit einer zuvor beschriebenen Rungenverbindung am zugehörigen Bodenträger festgelegt sein kann. Unabhängig davon ist es weiter bevorzugt, wenn wenigstens eine Längsseite des Planenaufbaus mehr als eine Mittelrunge aufweist, die über eine Rungenverbindung der beschriebenen Art mit dem Bodenträger verbunden ist. Umso mehr können die zuvor genannten Vorteile genutzt werden.

Bei einer ersten besonders bevorzugten Ausgestaltung des Planenaufbaus sind der wenigstens eine Verschlussriegel und die wenigstens eine Verschlussaufnahme der wenigstens einen Rungenverbindung vom wenigstens einen Schwenkriegel und der wenigstens einen Schwenkaufnahme der wenigstens einen Rungenverbindung in Richtung des Dachholms beabstandet. Dies gilt jedenfalls in der Fahrstellung der Mittelrunge. Auf diese Weise wird sichergestellt, dass der wenigstens eine Verschlussriegel beim Schwenken des wenigstens einen Schwenkriegels um die zugehörige Schwenkaufnahme stets je nach der Schwenkrichtung zuverlässig in Eingriff und außer Eingriff mit der wenigstens einen zugehörigen Verschlussaufnahme gelangt. Das Lösen und Wiederverbinden der Mittelrunge wird so nicht eingeschränkt.

Besonders einfach und zuverlässig kann es zudem sein, wenn die vorderen Anschlagflächenpaare an einem einzigen Verschlussriegel und einer einzigen korrespondierenden Verschlussaufnahme der wenigstens einen Rungenverbindung vorgesehen sind. Gleiches gilt alternativ oder zusätzlich für den Fall, dass die hinteren Anschlagflächenpaare an einem einzigen Verschlussriegel und einer einzigen korrespondierenden Verschlussaufnahme der wenigstens einen Rungenverbindung vorgesehen sind. Unter Umständen kann die Rungenverbindung noch einfacher und kompakter ausgebildet sein, wenn die vorderen Anschlagflächenpaare und die hinteren Anschlagflächenpaare an einem einzigen Verschlussriegel und einer einzigen korrespondierenden Verschlussaufnahme vorgesehen sind.

Um die Mittelrunge zuverlässig gegenüber einem Schwenken nach vorne am Rungenlager zu sichern, kann es sich anbieten, wenn die Anschlagflächen der vorderen Anschlagflächenpaare des wenigstens einen Verschlussriegels in wenigstens im Wesentlichen entgegengesetzte Richtungen weisen. Die Mittelrunge kann alternativ oder zusätzlich zuverlässig gegenüber einem Schwenken nach hinten am Rungenlager gesichert werden, wenn die Anschlagflächen der hinteren Anschlagflächenpaare des wenigstens einen Verschlussriegels in wenigstens im Wesentlichen entgegengesetzte Richtungen weisen. Demselben Zweck kann es bedarfsweise dienlich sein, wenn die Anschlagflächen der vorderen Anschlagflächenpaare und/oder der hinteren Anschlagflächenpaare der wenigstens einen Verschlussaufnahme in wenigstens im Wesentlichen entgegengesetzte Richtungen weisen.

Alternativ oder zusätzlich kann zur Sicherung der Mittelrunge an dem zugehörigen Rungenlager vorgesehen sein, dass jeweils wenigstens eine Anschlagfläche der vorderen Anschlagflächenpaare und/oder der hinteren Anschlagflächenpaare des wenigstens einen Verschlussriegels gegenüber dem Bodenträger und/oder Dachholm nach oben weist. Unabhängig davon kann es ebenso zweckmäßig sein, wenn jeweils wenigstens eine Anschlagfläche der vorderen Anschlagflächenpaare und/oder der hinteren Anschlagflächenpaare des wenigstens einen Verschlussriegels gegenüber dem Bodenträger und/oder Dachholm nach unten weist. Die genannten Anschlagflächen müssen dabei nicht ausschließlich nach oben bzw. nach unten weisen. Es ist noch nicht einmal erforderlich, dass die genannten Anschlagflächen überwiegend nach oben bzw. nach unten weisen.

Besonders zweckmäßig kann es sein, wenn der wenigstens eine Verschlussriegel und die wenigstens eine Verschlussaufnahme eine Keilwirkung erzeugen, so dass auch ein Verschieben der Mittelrunge in der Längsrichtung des Bodenträgers verhindert werden kann. Dies lässt sich beispielsweise erzielen, indem jeweils wenigstens eine Anschlagfläche der vorderen Anschlagflächenpaare des wenigstens einen Verschlussriegels in einer senkrechten Projektion auf eine Ebene senkrecht zur Schwenkachse gegenüber der Längserstreckung des Bodenträgers und/oder Dachholms geneigt ist. Alternativ oder zusätzlich lässt sich die Keilwirkung auch erzielen, wenn jeweils wenigstens eine Anschlagfläche der hinteren Anschlagflächenpaare des wenigstens einen Verschlussriegels in einer senkrechten Projektion auf eine Ebene senkrecht zur Schwenkachse gegenüber der Längserstreckung des Bodenträgers und/oder Dachholms geneigt ist. Wenn eine entsprechende Neigung der vorderen Anschlagflächen und der hinteren Anschlagflächen vorgesehen wird, kann ein Verschieben nach vorne und nach hinten zumindest bereichsweise verhindert werden.

Insbesondere ergänzend kann es zweckmäßig sein, beispielsweise um korrespondierende, eine Keilwirkung erzielende Anschlagflächenpaare bereitzustellen, wenn die wenigstens eine Verschlussaufnahme wenigstens eine vordere Anschlagfläche und/oder wenigstens eine hintere Anschlagfläche aufweist, die in einer senkrechten Projektion auf eine Ebene senkrecht zur Schwenkachse gegenüber der Längserstreckung des Bodenträgers und/oder Dachholms geneigt ist.

Alternativ oder zusätzlich kann der wenigstens eine Verschlussriegel und die wenigstens eine Verschlussaufnahme auch wenigstens abschnittsweise keilförmig ausgebildet sein. Je nach der Ausgestaltung der Keilform kann dann eine zweckmäßige Keilwirkung zur Sicherung der Mittelrunge am Rungenlager bewirkt werden. Die Anschlagflächen eines vorderen Anschlagflächenpaars und eines hinteren Anschlagflächenpaars können dann einfach auf gegenüberliegenden Seiten der entsprechenden, keilförmigen Abschnitte vorgesehen sein.

Um beispielsweise sicherzustellen, dass einem Verschieben der Mittelrunge ein immer größerer Widerstand entgegengesetzt wird, je weiter die Mittelrunge in Längsrichtung des zugehörigen Bodenträgers verschoben wird, kann sich der wenigstens eine keilförmige Abschnitt bezogen auf den Lagerabschnitt und/oder bezogen auf das Rungenlager nach innen hin verjüngen. Die Mittelrunge wird mithin bei zunehmendem Verschieben in Längsrichtung zunehmend in der Rungenverbindung verkeilt.

Um ein gegenseitiges Verkeilen in gegenüberliegenden Längsrichtungen des Planenaufbaus zu bewirken, kann der wenigstens eine Verschlussriegel und die wenigstens eine Verschlussaufnahme jeweils zwei keilförmige Abschnitte aufweisen. Die keilförmigen Abschnitte weisen dabei vorzugsweise in gegenüberliegende Richtungen, so dass die Mittelrunge in beiden Längsrichtungen des Planenaufbaus arretiert werden kann. Dies ist in besonders vorteilhafter und einfacher Weise möglich, wenn sich die keilförmigen Abschnitte des wenigstens einen Verschlussriegels und der wenigstens einen Verschlussaufnahme jeweils in Richtung aufeinander zu verjüngen.

Dabei können die keilförmigen Abschnitte des wenigstens einen Verschlussriegels untereinander über einen Verbindungssteg verbunden sein, wie alternativ oder zusätzlich auch die keilförmigen Abschnitte der wenigstens einen Verschlussaufnahme miteinander über einen Verschlusskanal verbunden sein können. Dies dient einerseits der Aufnahme größerer Kräfte und kann andererseits auch der Aufnahme von Kräften in der Schwerkraftrichtung oder entgegen der Schwerkraftrichtung dienen.

Wenn der Rungenkörper eine zwischen einer oberen Freigabestellung und einer unteren Verriegelungsstellung verstellbare Verriegelungslasche aufweist kann die Mittelrunge in der Fahrstellung arretiert werden. Gleichzeitig lässt sich die Runge aber auch entriegeln, um gegenüber dem Rungelager geschwenkt zu werden. Dabei wird dann insbesondere der Lagerabschnitt der Mittelrunge um das Rungenlager geschenkt, so dass sich der Lagerabschnitt der Mittelrunge anschließend vom Rungenlager abheben lässt. Für ein sicheres und einfaches Arretieren der Mittelrunge in der Fahrstellung kann das Rungenlager eine Verriegelungsaufnahme zur Aufnahme der Verriegelungslasche in der Fahrstellung aufweisen. In der Verriegelungsstellung greifet die Verriegelungslasche dann in die Verriegelungsaufnahme ein, um ein versehentliches Trennen von Mittelrunge und Rungenlager zu vermeiden.

Damit die Mittelrunge einfach arretiert und wieder gelöst werden kann, kann die Verriegelungslasche mit einem die Verriegelungslasche in die Verriegelungsstellung vorspannenden Federmittel gekoppelt sein. Das Arretieren erfolgt bei richtiger Ausrichtung von Mittelrunge und Rungelager dann bedarfsweise automatisch. Das Lösen der Arretierung bedarf dann der bewussten Verstellung der Verrieglungslasche aus der Verriegelungsaufnahme heraus, etwa durch Betätigen eines Hebels.

Unabhängig davon, kann die wenigstens eine Mittelrunge in der Fahrstellung in den Längsrichtungen des Dachholms formschlüssig am Dachholm gehalten sein. Dann ist die Mittelrunge nicht nur am Bodenträger gegenüber einem Schwenken oder Verstellen in der Längsrichtung des Planenaufbaus gehalten, sondern auch am Dachholm. Dies unterstützt die zuvor bereits beschriebenen Vorteile.
Zur Aussteifung des Planenaufbaus kann nicht nur die beschriebene Rungenverbindung beitragen, sondern auch vorgesehen sein, dass die wenigstens eine Mittelrunge an gegenüberliegenden Seiten jeweils mehrere wenigstens im Wesentlichen U-förmige Aufsatzlattenhalterungen zum Einstecken von Aufsatzlatten aufweist. Die Aufsatzlatten können infolge der sehr genauen Positionierung und Arretierung längs des Planenaufbaus mit nur einem geringen Spiel in die Aufsatzlattenhaltungen der Mittelrunge eingesteckt werden, so dass die Aufsatzlatten beim Verwinden des Planenaufbaus zusätzlich Kräfte aufnehmen und ableiten können.

Nachfolgend wird die Erfindung anhand einer lediglich ein Ausführungsbeispiel darstellenden Zeichnung näher erläutert. In der Zeichnung zeigt
- Fig. 1: ein Nutzfahrzeug mit einem erfindungsgemäßen Planenaufbau in einer perspektivischen Ansicht,
- Fig. 2: ein Detail einer an einem Bodenträger festgelegten Mittelrunge des Planenaufbaus aus Fig. 1 in einer Fahrstellung in einer Draufsicht,
- Fig. 3: das Detail aus Fig. 2 in einer mit der Mittelrunge in einer gegenüber dem Bodenträger zur Seite geschwenkten Zustand in einer perspektivischen Ansicht,
- Fig. 4A-B: das Detail aus Fig. 2 in zwei unterschiedlichen Stellungen während des Lösens der Mittelrunge vom Bodenträger in perspektivischen Ansichten und
- Fig. 5: ein Detail der Fig 4A in einer vergrößerten, perspektivischen Ansicht.

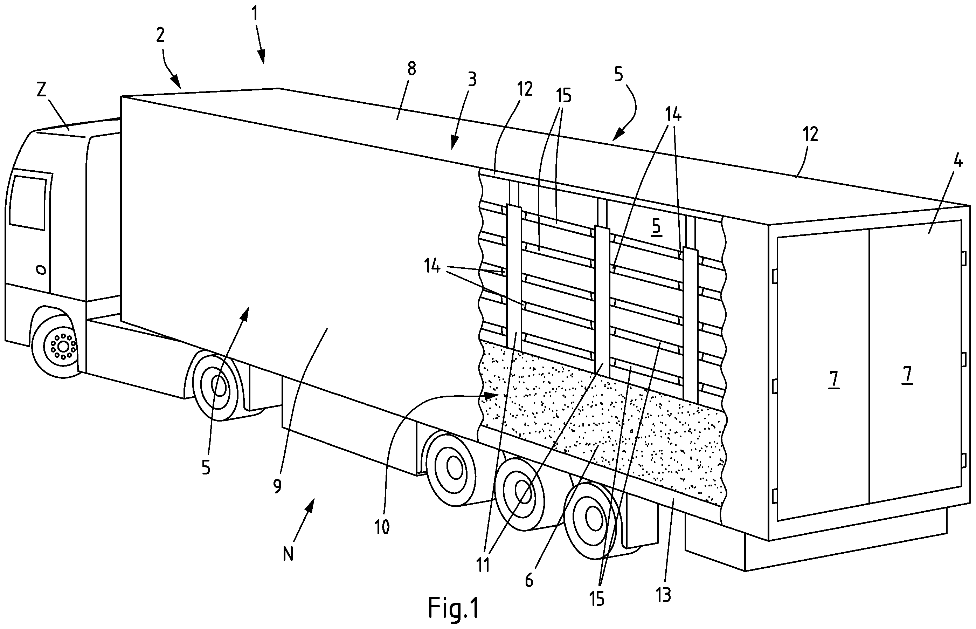

In der Fig. 1 ist ein von einer Zugmaschine Z gezogenes Nutzfahrzeug N in Form eines Sattelaufliegers mit einem Planenaufbau 1 dargestellt. Der Planenaufbau 1 weist eine Stirnwand 2, ein Dach 3, eine Rückwand 4, zwei Seitenwände 5 und einen Ladeboden 6 auf. Die Rückwand 4 wird durch Flügeltüren 7 verschlossen. Dagegen wird das Dach 3 durch eine Dachplane 8 verschlossen, während die Seitenwände 2 durch Seitenplanen 9 verschlossen sind. Die Seitenplanen 9 können nach Art eines sogenannten Curtainsiders im offenen Zustand zur Seite verschoben werden. In der Fig. 1 ist ein Teil der vorderen Seitenplane 9 weggelassen worden, so dass dort der Blick in den Laderaum 10 freigegeben ist. Auf der Innenseite der Seitenplanen 9 sind Mittelrungen 11 vorgesehen, die das Dach 3 des Planenaufbaus 1 gegenüber dem Ladeboden 6 abstützen. Dazu sind die Mittelrungen 11 einerseits mit einem Dachholm 12 und andererseits mit einem Bodenträger 13 des Ladebodens 6 verbunden. Dachholme 12 und Bodenträger 13 sind auf beiden Längsseiten des Dachs 3 und des Ladebodens 6 wenigstens im Wesentlichen übereinander angeordnet. Über die Höhe der Mittelrungen 11 verteilt sind Aufsatzlattenhalterungen 14 vorgesehen, in die Aufsatzlatten 15 eingeschoben sind. Die Aufsatzlatten 15 erstrecken sich dabei zwischen den Mittelrungen 11. Die endständigen Mittelrungen 11 sind über die Aufsatzlatten mit den nicht im Einzelnen dargestellten aber an sich bekannten Eckrungen an den Längsenden der Seitenwände 5 des Planenaufbaus 1 verbunden.

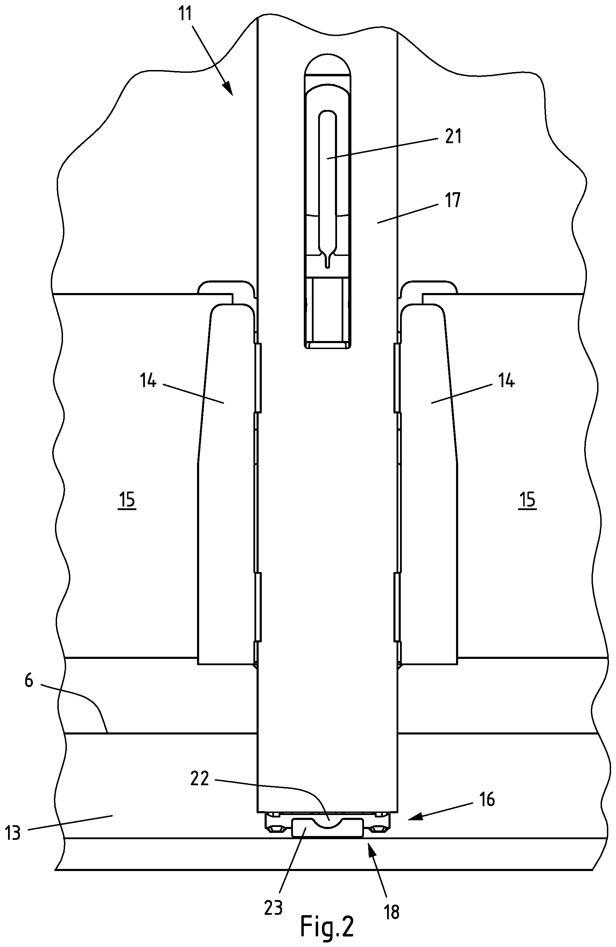

In der Fig. 2 ist ein unterer Bereich einer Mittelrunge 11 dargestellt, der mit einem Lagerabschnitt 16 und einem Rungenkörper 17 an einem Rungenlager 18 des Bodenträgers 13 des Ladebodens 6 festgelegt ist. Angrenzend an den Ladeboden 6 sind links und rechts der Mittelrunge 11 U-förmige Aufsatzlattenhalterungen 14 vorgesehen, in die korrespondierende Aufsatzlatten 15 eingeschoben sind. Dem unteren Bereich der Mittelrunge 11 zugeordnet ist am Rungenkörper 17 der Mittelrunge 11 ein Hebel 21 vorgesehen, über den der Lagerabschnitt 16 der Mittelrunge 11 vom Rungenkörper 17 der Mittelrunge 11 derart gelöst werden kann, dass der Lagerabschnitt 16 der Mittelrunge 11 gegenüber dem Rungenkörper 17 geschwenkt werden kann. Dies ermöglicht es der Mittelrunge 11, von dem Rungenlager 18 des Bodenträgers 13 getrennt zu werden.

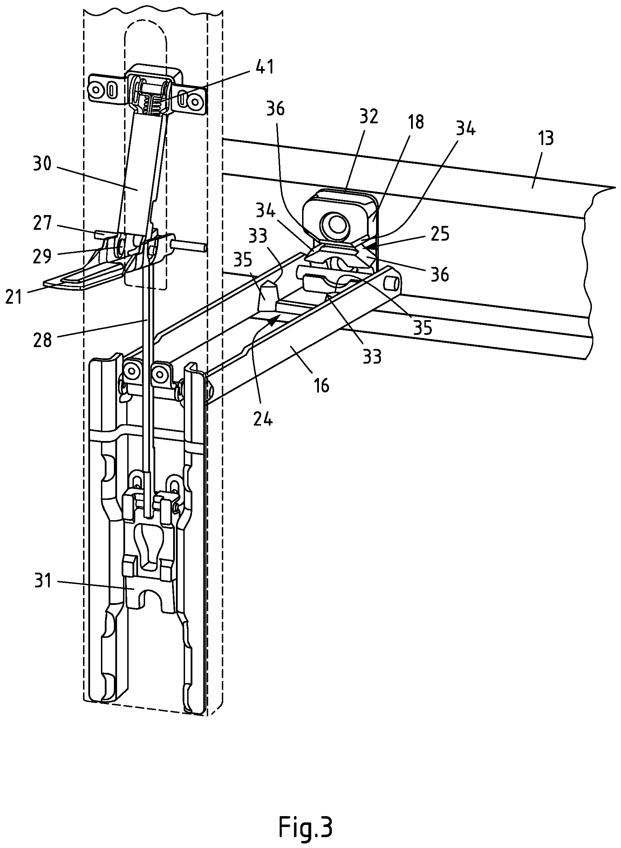

In der Fig. 3 ist die Mittelrunge 11 mit gegenüber dem Rungenkörper 17 zur Seite geschwenkten und in das Rungenlager 18 eingreifenden Lagerabschnitt 16 dargestellt. In dieser Stellung ist der Lagerabschnitt 16 der Mittelrunge 11 nur noch über einen Schwenkriegel 22 mit einer Schwenkaufnahme 23 des Rungenlagers 18 verbunden, wobei der Schwenkriegel 22 in die Schwenkaufnahme 23 eingreift. Das dargestellte und insoweit bevorzugte Rungenlager 18 ist als Gußteil ausgebildet und mit dem Bodenträger 13 verschraubt. Der Schwenkriegel 22 kann in dieser Stellung sehr einfach aus der Schwenkaufnahme 23 herausgezogen werden. Zum erneuten Verbinden der Mittelrunge 11 mit dem Bodenträger 13, etwa nach einem Be- und/oder Entladen des Planenaufbaus 1 kann der Schwenkriegel 22 des Lagerabschnitts 16 der Mittelrunge 11 wieder in die Schwenkaufnahme 23 des Rungenlagers 18 eingesetzt werden. Anschließend wird der Lagerabschnitt 16 nach oben geschwenkt und dabei der Rungekörper 17 nach oben geschoben. Dabei wird zudem der Lagerabschnitt 16 in den Rungekörper 17 geschwenkt, wobei der Lagerabschnitt 16 mit dem restlichen Teil der Mittelrunge 11 nach oben geschwenkt wird. Dabei gelangt die Mittelrunge 11 in die in der Fig. 2 dargestellte Stellung zurück.

Am Lagerabschnitt 16 ist neben dem Schwenkriegel 22 noch ein Verschlussriegel 24 in einem gewissen Abstand zum Schwenkriegel 22 vorgesehen. Der Verschlussriegel 24 greift in der Fahrstellung der Mittelrunge 11 in eine Verschlussaufnahme 25 ein. Beim Verschenken des Lagerabschnitts 16 der Mittelrunge 11 wird der Verschlussriegel 24 jedoch aus der Verschlussaufnahme 25 heraus geschwenkt, damit die Mittelrunge 11 vom Bodenträger 13 getrennt werden kann.

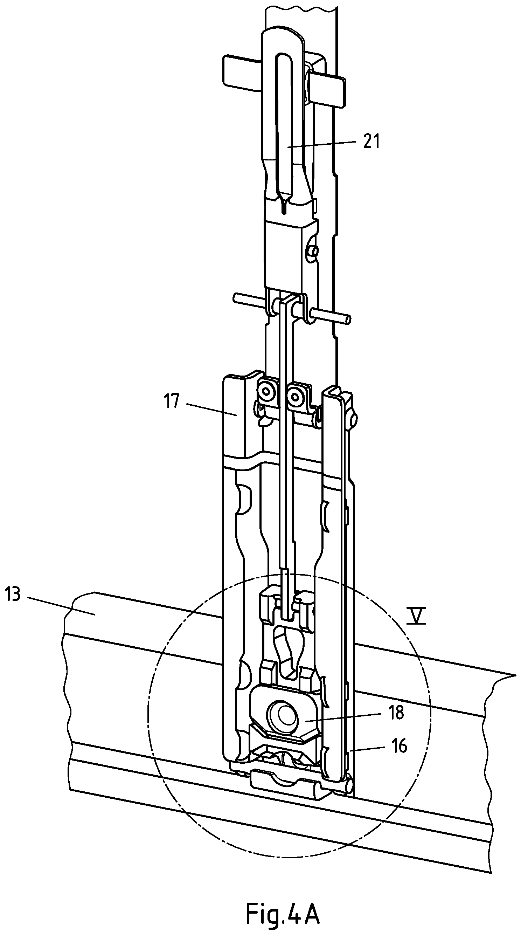

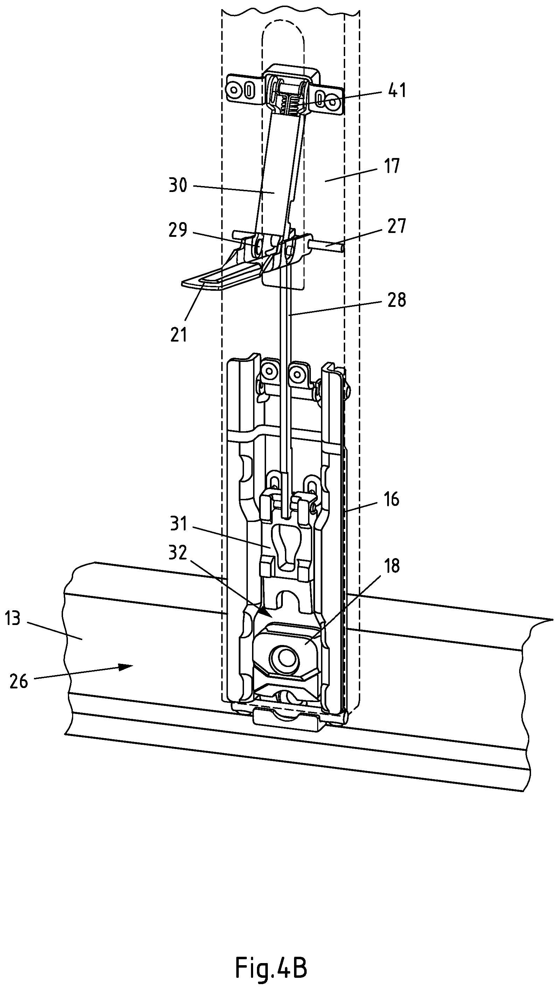

In den Fig. 4A-B ist die Rungenverbindung 26 dargestellt. Der Hebel 21 ist über eine Schwenkachse 27 mit einem Steuerhebel 28 sowie über eine Schwenkachse 29 mit einer Halterung 30 verbunden. Wird der Hebel 21 nach unten geschwenkt, so stützt sich der Hebel 21 mit seinem unteren Ende an dem rückwärtigen Gehäuseteil des Rungenkörpers 17 ab und zieht dabei den am Hebel 21 festgelegten Steuerhebel 28 nach oben. Das untere Ende des Steuerhebels 28 ist mit einer Verriegelungslasche 31 verbunden, die dabei vom Steuerhebel 28 aus einer korrespondierenden Verriegelungsaufnahme 32 am oberen Ende des Rungenlagers 18 nach oben herausgezogen wird. Die Verriegelungslasche 31 gelangt so von der Verriegelungsstellung in eine Freigabestellung, und zwar gegen eine Rückstellkraft eines Federmittels 41, das im Bereich des Hebels 21 vorgesehen ist und die Verriegelungslasche 31 in die Verriegelungsstellung vorspannt. Sodann kann der Rungenkörper 17 gegenüber dem Rungenlager 18 nach außen verstellt werden. Dabei bleibt aber der Lagerabschnitt 16 über den Schwenkriegel 22 mit der Schwenkaufnahme 23 des Rungenlagers 18 verbunden. Dies führt dazu, dass der Lagerabschnitt 16 gegenüber dem Rungenkörper 17 zur Seite geschwenkt wird, wobei der Verschlussriegel 24 des Lagerabschnitts 16 außer Eingriff mit der Verschlussaufnahme 25 des Rungenlagers 18 gelangt, wie dies in der Fig, 3 dargestellt ist.

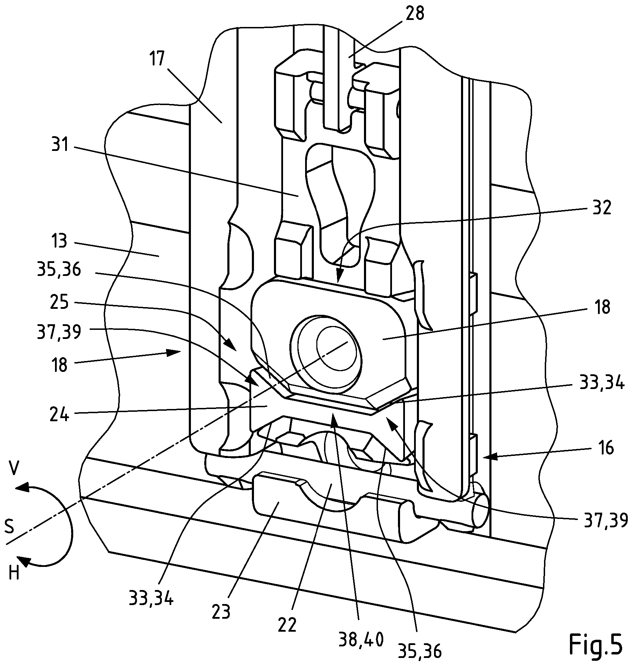

Wie insbesondere den Fig. 3 und 5 entnommen werden kann, weist der Verschlussriegel 24 zwei vordere Anschlagflächen 33 auf, die an zwei vorderen Anschlagflächen 34 der Verschlussaufnahme 25 des Rungenlagers 18 in Anlage gelangen können, wenn die Mittelrunge 11 um eine Schwenkachse S senkrecht zum Bodenträger 13 und parallel zum Ladeboden 6 nach vorne V geschwenkt wird. Die vorderen Anschlagflächen 33,34 des Verschlussriegels 24 und der Verschlussaufnahme 25 bilden mithin vordere Anschlagflächenpaare 33,34, wobei die Schwenkachse S der Mittelrunge 11 zwischen den vorderen Anschlagflächenpaaren 33,34 vorgesehen ist.

Der Verschlussriegel 24 weist ferner zwei hintere Anschlagflächen 35 auf, die an zwei hinteren Anschlagflächen 36 der Verschlussaufnahme 25 des Rungenlagers 18 in Anlage gelangen können, wenn die Mittelrunge 11 um eine Schwenkachse S senkrecht zum Bodenträger 13 und parallel zum Ladeboden 6 nach hinten geschwenkt wird. Die hinteren Anschlagflächen 35,36 des Verschlussriegels 24 und der Verschlussaufnahme 25 bilden mithin hintere Anschlagflächenpaare 35,36, wobei die Schwenkachse S der Mittelrunge 11 zwischen den hinteren Anschlagflächenpaaren 35,36 vorgesehen ist.

Die vorderen und die hinteren Anschlagflächen 33,35 des Verschlussriegels 24 sind an keilförmigen Abschnitten 37 vorgesehen, die sich aufeinander zu verjüngen und über einen Verbindungssteg 38 miteinander verbunden sind. Die keilförmigen Abschnitte 37 weisen dabei jeweils an gegenüberliegenden Seiten eine vordere Anschlagfläche 33 und eine hintere Anschlagfläche 35 auf. Die vorderen Anschlagflächen 3 und die hinteren Anschlagflächen 35 sind dabei in einer Projektion senkrecht auf eine Ebene senkrecht zur Schwenkachse S um etwa 30° gegenüber der Ebene des Ladebodens 6 geneigt. Dabei weist jeweils eine vordere Anschlagfläche 33 und eine hintere Anschlagfläche 35 nach oben und eine nach unten.

Die vorderen Anschlagflächen 34 und die hinteren Anschlagflächen 36 der Verschlussaufnahme 25 sind ebenfalls an keilförmigen Abschnitten 39 vorgesehen, welche korrespondierend zu den keilförmigen Abschnitten 37 des Verschlussriegels 24 ausgebildet sind. Auch die keilförmigen Abschnitte 39 der Verschlussaufnahme 25 verjüngen sich aufeinander zu, wobei die keilförmigen Abschnitte 39 der Verschlussaufnahme 25 über einen Verschlusskanal 40 zur Aufnahme des Verriegelungsstegs 38 verbunden sind. Die keilförmigen Abschnitte 39 der Verschlussaufnahme 25 weisen jeweils an gegenüberliegenden Seiten eine vordere Anschlagfläche 34 und eine hintere Anschlagfläche 36 auf. Die vorderen Anschlagflächen 34 und die hinteren Anschlagflächen 36 der Verschlussaufnahme 25 sind dabei in einer Projektion senkrecht auf eine Ebene senkrecht zur Schwenkachse S um etwa 30° gegenüber der Ebene des Ladebodens 6 geneigt. Dabei weist jeweils eine vordere Anschlagfläche 34 und eine hintere Anschlagfläche 36 nach oben und eine nach unten.

## Patentansprüche

1. Planenaufbau (1) für ein Nutzfahrzeug (N), insbesondere Lastkraftwagen, Anhänger oder Sattelauflieger, mit wenigstens einem seitlichen Dachholm (12), wenigstens einem seitlichen Bodenträger (13) und wenigstens einer von einer den Dachholm (12) gegenüber dem Bodenträger (13) abstützenden Fahrstellung in eine vom Bodenträger (13) getrennte Ladestellung und zurück verstellbaren Mittelrunge (11), wobei der Bodenträger (13) wenigstens ein Rungenlager (18) und die wenigstens eine Mittelrunge (11) einen Lagerabschnitt (16) zum Ausbilden einer lösbaren Rungenverbindung (26) zwischen dem Rungenlager (18) und der Mittelrunge (11) aufweisen, wobei das Rungenlager (18) der wenigstens einen Rungenverbindung (26) eine Schwenkaufnahme (23) und der Lagerabschnitt (16) einen Schwenkriegel (22) zum Eingreifen in die Schwenkaufnahme (23) und zum Schwenken des Lagerabschnitts (16) um das Rungenlager (18) bei in die Schwenkaufnahme (23) eingreifendem Schwenkriegel (22) aufweisen und wobei das Rungenlager (18) und der Lagerabschnitt (16) der wenigstens einen Rungenverbindung (26) wenigstens eine Verschlussaufnahme (25) und wenigstens einen in der Fahrstellung in die wenigstens eine Verschlussaufnahme (25) eingreifenden Verschlussriegel (24) aufweisen,
**dadurch gekennzeichnet, dass**
- der wenigstens eine Verschlussriegel (24) und die wenigstens eine Verschlussaufnahme (25) der wenigstens einen Rungenverbindung (26) jeweils wenigstens ein korrespondierendes vorderes Anschlagflächenpaar (33,34) derart aufweisen, so dass in der Fahrstellung die vorderen Anschlagflächenpaare (33,34) bei einem Schwenken der Mittelrunge (11) nach vorne (V) um eine in Längsrichtung des Bodenträgers (13) und/oder des Dachholms (12) zwischen den vorderen Anschlagflächenpaaren (33,34) und quer zum Bodenträger (13) und/oder Dachholm (12) angeordnete Schwenkachse (S) in eine ein weiteres Schwenken der Mittelrunge (11) nach vorne (V) formschlüssig blockierende Anlage aneinander gelangen und/oder dass
- der wenigstens eine Verschlussriegel (24) und die wenigstens eine Verschlussaufnahme (25) der wenigstens einen Rungenverbindung (26) jeweils wenigstens ein korrespondierendes hinteres Anschlagflächenpaar (35,36) derart aufweisen, so dass in der Fahrstellung die hinteren Anschlagflächenpaare (35,36) bei einem Schwenken der Mittelrunge (11) nach hinten (H) um eine in Längsrichtung des Bodenträgers (13) und/oder des Dachholms (12) zwischen den hinteren Anschlagflächenpaaren (35,36) und quer zum Bodenträger (13) und/oder Dachholm (12) angeordnete Schwenkachse (S) in eine ein weiteres Schwenken der Mittelrunge (11) nach hinten (H) formschlüssige blockierende Anlage aneinander gelangen.

2. Planenaufbau nach Anspruch 1,
**dadurch gekennzeichnet, dass**
der wenigstens eine Verschlussriegel (24) und die wenigstens eine Verschlussaufnahme (25) der wenigstens einen Rungenverbindung (26) in der Fahrstellung vom wenigstens einen Schwenkriegel (22) und der wenigstens einen Schwenkaufnahme (23) der wenigstens einen Rungenverbindung (26) in Richtung des Dachholms (12) beabstandet sind.

3. Planenaufbau nach Anspruch 1 oder 2,
**dadurch gekennzeichnet, dass**
die vorderen Anschlagflächenpaare (33,34) an einem einzigen Verschlussriegel (24) und einer einzigen korrespondierenden Verschlussaufnahme (25) der wenigstens einen Rungenverbindung (26) vorgesehen sind und/oder dass die hinteren Anschlagflächenpaare (35,36) an einem einzigen Verschlussriegel (24) und einer einzigen korrespondierenden Verschlussaufnahme (25) der wenigstens einen Rungenverbindung (26) vorgesehen sind.

4. Planenaufbau nach Anspruch 3,
**dadurch gekennzeichnet, dass**
die vorderen Anschlagflächenpaare (33,34) und die hinteren Anschlagflächenpaare (35,36) an einem einzigen Verschlussriegel (24) und einer einzigen korrespondierenden Verschlussaufnahme (25) vorgesehen sind.

5. Planenaufbau nach einem der Ansprüche 1 bis 4,
**dadurch gekennzeichnet, dass**
die Anschlagflächen (33,35) der vorderen Anschlagflächenpaare (33,34) und/oder der hinteren Anschlagflächenpaare (35,36) des wenigstens einen Verschlussriegels (24) in wenigstens im Wesentlichen entgegengesetzte Richtungen weisen und/oder die Anschlagflächen (34,36) der vorderen Anschlagflächenpaare (33,34) und/oder der hinteren Anschlagflächenpaare (35,36) der wenigstens einen Verschlussaufnahme (25) in wenigstens im Wesentlichen entgegengesetzte Richtungen weisen.

6. Planenaufbau nach einem der Ansprüche 1 bis 5,
**dadurch gekennzeichnet, dass**
jeweils wenigstens eine Anschlagfläche (33,35) der vorderen Anschlagflächenpaare (33,34) und/oder der hinteren Anschlagflächenpaare (35,36) des wenigstens einen Verschlussriegels (24) gegenüber dem Bodenträger (13) und/oder Dachholm (12) nach oben weist und/oder dass jeweils wenigstens eine Anschlagfläche (34,36) der vorderen Anschlagflächenpaare (33,34) und/oder der hinteren Anschlagflächenpaare (35,36) des wenigstens einen Verschlussriegels (24) gegenüber dem Bodenträger (13) und/oder Dachholm (12) nach unten weist.

7. Planenaufbau nach einem der Ansprüche 1 bis 6,
**dadurch gekennzeichnet, dass**
sich jeweils wenigstens eine Anschlagfläche (33,35) der vorderen Anschlagflächenpaare (33,34) und/oder der hinteren Anschlagflächenpaare (35,36) des wenigstens einen Verschlussriegels (24) in einer senkrechten Projektion auf eine Ebene senkrecht zur Schwenkachse (S) gegenüber der Längserstreckung des Bodenträgers (13) und/oder Dachholms (12) geneigt erstreckt und/oder dass sich jeweils wenigstens eine Anschlagfläche (34,36) der vorderen Anschlagflächenpaare (33,34) und/oder der hinteren Anschlagflächenpaare (35,36) der wenigstens einen Verschlussaufnahme (25) in einer senkrechten Projektion auf eine Ebene senkrecht zur Schwenkachse (S) gegenüber der Längserstreckung des Bodenträgers (13) und/oder Dachholms (12) geneigt erstreckt.

8. Planenaufbau nach einem der Ansprüche 1 bis 7,
**dadurch gekennzeichnet, dass**
der wenigstens eine Verschlussriegel (24) und die wenigstens eine Verschlussaufnahme (25) wenigstens abschnittsweise keilförmig ausgebildet ist und dass an gegenüberliegenden Seiten der jeweils wenigstens einen korrespondierenden keilförmigen Abschnitte (37,39) jeweils eine Anschlagfläche (33,34) eines vorderen Anschlagflächenpaars (33,34) und eine Anschlagfläche (35,36) eines hinteren Anschlagflächenpaars (35,36) vorgesehen sind.

9. Planenaufbau nach Anspruch 8,
**dadurch gekennzeichnet, dass**
sich der wenigstens eine keilförmige Abschnitt (37,39) bezogen auf den Lagerabschnitt (16) und/oder bezogen auf das Rungenlager (18) nach innen hin verjüngt.

10. Planenaufbau nach Anspruch 8 oder 9,
**dadurch gekennzeichnet, dass**
der wenigstens eine Verschlussriegel (24) und die wenigstens eine Verschlussaufnahme (25) jeweils zwei keilförmige Abschnitte (37,39) aufweist und, vorzugsweise, dass sich die keilförmigen Abschnitte (37,39) des wenigstens einen Verschlussriegel (24) und der wenigstens einen Verschlussaufnahme (25) jeweils in Richtung aufeinander zu verjüngen.

11. Planenaufbau nach Anspruch 10,
**dadurch gekennzeichnet, dass**
die keilförmigen Abschnitte (37,39) des wenigstens einen Verschlussriegels (24) und/oder der wenigstens einen Verschlussaufnahme (25) untereinander über einen Verbindungssteg (38) und/oder über einen Verschlusskanal (40) miteinander verbunden sind.

12. Planenaufbau nach einem der Ansprüche 1 bis 11,
**dadurch gekennzeichnet, dass**
der Lagerabschnitt (16) eine zwischen einer oberen Freigabestellung und einer unteren Verriegelungsstellung verstellbare Verriegelungslasche (31) aufweist und dass das Rungenlager (18) eine Verriegelungsaufnahme (32) zur Aufnahme der Verriegelungslasche (31) in der Fahrstellung und der Verriegelungsstellung der Verriegelungslasche (31) aufweist.

13. Planenaufbau nach Anspruch 12,
**dadurch gekennzeichnet, dass**
die Verriegelungslasche (31) mit einem die Verriegelungslasche (31) in die Verriegelungsstellung vorspannenden Federmittel (41) gekoppelt ist und/oder dass die wenigstens eine Mittelrunge (11) in der Fahrstellung in den Längsrichtungen des Dachholms (12) formschlüssig am Dachholm (12) gehalten ist.

14. Planenaufbau nach einem der Ansprüche 1 bis 13,
**dadurch gekennzeichnet, dass**
die wenigstens eine Mittelrunge (11) an gegenüberliegenden Seiten jeweils mehrere wenigstens im Wesentlichen U-förmige Aufsatzlattenhalterungen (14) zum Einstecken von Aufsatzlatten (15) aufweist.
